# EUROPÄISCHE PATENTSCHRIFT

(11) **EP 2 632 843 B1**
(45) Veröffentlichungstag und Bekanntmachung des Hinweises auf die Patenterteilung: **04.03.2015**
(21) Anmeldenummer: 11813761.1
(22) Anmeldetag: 26.10.2011
(51) Int. Cl.: F16F 9/32, B66C 23/82, B66C 23/92, F16F 9/36

(54) **RÜCKFALLPRESSE**
RECOIL PRESS
VÉRIN ANTI-RETOUR

(30) Priorität: 29.10.2010 DE 102010049750
(43) Veröffentlichungstag der Anmeldung: 04.09.2013
(73) Patentinhaber: Montanhydraulik GmbH, 59439 Holzwickede (DE)
(72) Erfinder: STAMMEN, Christian, 59439 Holzwickede (DE)
(74) Vertreter: Griepenstroh, Jörg
(86) Internationale Anmeldenummer: PCT/DE2011/001897
(87) Internationale Veröffentlichungsnummer: WO 2012/055396

(56) Entgegenhaltungen:
- DE-B2- 2 733 528
- DATABASE WPI Week 200907 Thomson Scientific, London, GB; AN 2009-B14403 XP002674425, -& CN 201 166 022 Y (CHANGSHA ZHONGLIAN HEAVY IND TECHNOLOGY) 17. Dezember 2008 (2008-12-17)

## Beschreibung

Die Erfindung betrifft eine Rückfallpresse eines Kranes gemäß den Merkmalen des ersten Patentanspruches 1. Die Abspannung eines Auslegers von Kranen dient der Traglasterhöhung. Die Abspannung kann über Seile oder Stangen erfolgen und muss für eine sichere Funktion bei Bewegung des Auslegers oder bei Veränderung des Auslegerwinkels nachgeführt und ständig auf Spannung gehalten werden. Wichtiges Element ist dabei die sogenannte Rückfallstütze.

Nach dem Stand der Technik ist an der Rückfallstütze ein Hydraulikzylinder angebracht, der eine Druckkraft vom Ausleger auf die Rückfallstütze ausübt, um auch bei steiler Stellung des Auslegers definierte Kraftverhältnisse in der Abspannung sicherzustellen. Dieser Hydraulikzylinder wird als Rückfallpresse bezeichnet und kann als Plungerzylinder oder Differenzialzylinder ausgeführt sein. In einigen Fällen ist dieser Hydraulikzylinder nicht an eine zentrale Hydraulikanlage angeschlossen. Der Austausch von Öl wird durch einen externen Druckspeicher bei Bewegung des Zylinders ermöglicht.

Ein wichtiges Merkmal der Rückfallpresse ist die Druckkraft/Hub-Kennlinie. Diese wird durch die Wahl der Speicherbauart, dessen Auslegung und durch die Zylindergeometrie bestimmt. Dieser externe Speicher nimmt Raum ein und stellt ein hohes zusätzliches Gewicht dar. Da die Funktion der Rückfallpresse sicherheitsrelevant ist, hat die erhöhte Anzahl von Schnittschnellen und Verbindungsleitungen zwischen Zylinder und Speicher eine Erhöhung des Ausfallrisikos zur Folge.

Eine bekannte Sonderausführung zur Vermeidung dieser zusätzlichen Schnittstellen stellt ein Hydraulikzylinder dar, in dessen Kolbenstange ein Kolbenspeicher mit Gasvolumen integriert ist. Das Gasvolumen muss dabei etwas größer sein als das bei einer Hubbewegung des Zylinders verdrängte Ölvolumen. Es ergibt sich so zwingend eine gegenüber dem Hydraulikzylinder ohne Speicher erhöhte Baulänge und damit ein erhöhtes Gewicht. Das Mehrgewicht kann bei sachgerechter Konstruktion jedoch geringer sein als bei der Lösung mit externem Speicher. Für Einsatzfälle mit begrenzter Länge des Einbauraums ist teilweise zusätzlich zu dem in die Kolbenstange integrierten Speicher noch ein weiterer externer Gasbehälter nötig, der neben dem Zylinder angeordnet wird.

Aus der DE 27 33 528 B2 ist ein Gasdruckzylinder in Form einer Gasfeder bekannt. Ringraum und Bodenraum der Gasfeder stehen miteinander in Gasaustausch. Eine Dichtungsanordnung in einer Stangenführung des Gasdruckzylinders dichtet die Kolbenstange gegenüber dem Zylinder ab. Bei dieser Bauform einer Gasfeder soll eine spezielle Durchmesserreduzierung an der Kolbenstange vorgesehen sein, die es ermöglicht, die Gasfeder in der ausgefahrenen Stellung der Kolbenstange mit Gas zu befüllen. Dadurch kann der Druck des in den Zylinder eingefüllten Gases reduziert werden, da während des Füllens auf Grund der ausgefahrenen Stellung der Stange im Zylinderinneren bereits das maximal mögliche Volumen vorgegeben, d. h. also nicht durch eine eingefahrene Stange verkleinert ist und daher durch einen überhöhten Gasdruck ausgeglichen werden müsste.

Durch die DE 10 2004 017 405 A1 zählt eine Pneumatik zum Öffnen von Rauch- und Wärmeabzugsklappen zum Stand der Technik, bei welchem die Kolbenstange als Speicher ausgebildet ist. Die Kolbenstange besitzt an ihren in das Zylinderrohr hineinragenden, stirnseitigen Endbereichen einen Verschluss durch eine Anstechfolie. Die Anstechfolie kann durch eine Anstechnadel geöffnet werden, so dass ein innerhalb der Kolbenstange bevorratetes Druckgas aus einem Hohlraum der Kolbenstange entweichen und über einen mit der Kolbenstange verbundenen Kolben über die besagte Kolbenstange aus dem Zylinderrohr ausfahren kann. Der Vorteil liegt darin, dass die Kolbenstange gleichzeitig Speicher für ein Druckgas ist, welches für das Ausfahren der Kolbenstange im Bedarfsfalle benötigt wird. Es ist kein zusätzlicher Druckgasspeicher erforderlich, der von außen an die pneumatischen Zylinder angeschlossen werden muss.

Eine Rückfallpresse in Form eines Druckzylinders ist aus der CN 201166022 Y bekannt. Der Erfindung liegt die Aufgabe zugrunde, eine Rückfallpresse für einen Kran aufzuzeigen, welche möglichst kompakt und leicht ist.

Diese Aufgabe ist bei einer Rückfallpresse mit den Merkmalen des Patentanspruchs 1 gelöst.

Die erfindungsgemäße Rückfallpresse basiert auf einem völlig neuen, konstruktiven Konzept im Hinblick auf solche Rückfallpressen. Statt eines Hydraulikzylinders mit großem Ölvolumen und daran angeschossenen und/oder integriertem Druckölspeicher wird ein druckvorgespannter, gasgefüllter Zylinder eingesetzt. Das hat den Vorteil, dass bei Bewegung kein Ölvolumen mehr ausgetauscht werden muss. Folglich entfällt das Gewicht des Öls und auch das Gewicht des Trennkolbens, wenn es sich um eine Bauform mit Kolbenspeicher handelte.

Es ergibt sich insgesamt ein kürzerer Einbauraum bei gleicher Druckkraft/Hub-Kennlinie oder eine für verschiedene Anwendungsfälle gewünschte flachere Druckkraft/Hub-Kennlinie bei gleicher Einbaulänge. Die Abflachung der Druckkraft /Hub-Kennlinie ergibt sich durch die Vergrößerung des Gasvolumens.

Die erfindungsgemäße Rückfallpresse zeichnet sich durch folgende Merkmale aus:
a) Eine in einen Zylinderraum des Zylinders eingreifende Kolbenstange ist als Kolbenspeicher ausgebildet, wobei das Gas im Bodenraum des Zylinders mit dem Gas in der Kolbenstange im Austausch steht;
b) Ein die Kolbenstange umgebender Ringraum des Zylinders steht im Gasaustausch mit dem Bodenraum;
c) Eine Dichtungsanordnung in einer Stangenführung des Zylinders dichtet die Kolbenstange gegenüber dem Zylinder ab;
d) Die Dichtungsanordnung umfasst eine in der Stangenführung umlaufende Schmierstoffnut, über welche die Kolbenstange außenseitig geschmiert wird, wobei der Schmierstoff unter Zwischenschaltung eines Druckübertragers von dem im Zylinder herrschenden Gasdruck beaufschlagt ist.

Die Schmierung der Kolbenstange und der stangenseitigen Führungs- und Dichtungselemente ist wichtig für den Verschleiß und Korrosionsschutz, da nicht auszuschließen ist, dass derartige Krane teilweise sehr lange an einem Ort in Einsatz sind und weil die ausfahrende Kolbenstange Korrosion ausgesetzt ist. Es ist mithin im konkreten Anwendungsfall nicht ausreichend, vollständig auf einen Schmierstoff zu verzichten, da eine Schmierung erfolgen muss. Bei der Erfindung wird nunmehr vorgeschlagen, dass der Schmierstoff unter Zwischenschaltung eines Druckübertragers von dem im Zylinder herrschenden Gasdruck beaufschlagt wird. Das hat den Vorteil, dass der Schmierstoff, insbesondere Öl, ausschließlich zur Schmierung und zum Korrosionsschutz benötigt wird, sodass eine wesentlich geringere Ölmenge als bei einem kombinierten Gas / Öl - Zylinder benötigt wird. Daher kann auch der Einsatz hochwertiger bzw. teurer Öle mit verbesserten Kurosionsschutz- oder Tieftemperatureigenschaften wirtschaftlich werden.

Zudem ist es möglich, die bewährten Dichtungs- und Führungssysteme sowie Kolbenstangenbeschichtungen weiterhin zu verwenden.

Die Bauweise ohne auszutauschendes Ölvolumen ermöglicht Gewichtseinsparungen in einer Größenordnung von ca. 10 %. Es ergeben sich auch fertigungstechnische Vorteile, da die Kolbenstange durch den Wegfall des innen liegenden Trennkolbens nicht mehr innen bearbeitet werden muss. Sie kann zudem verkürzt werden.

Durch das im Ergebnis geringere Gewicht der Rückfallpresse wird die Montage vereinfacht und der Montageaufwand reduziert. Die erfindungsgemäße Rückfallpresse kann bei reduziertem Gewicht mit gleicher Kennlinie kompatibel mit vorhandenen konventionellen Abstützgeometrien ausgeführt werden, was einen einfachen Austausch ermöglicht. Bei Neukonstruktionen können kürzere Einbaumaße realisiert werden bei gleicher Druckkraft/Hub-Kennlinie. Ein geringerer Lagerstellenabstand bei kürzerem Einbaumaß ermöglicht größere konstruktive Freiheiten und dadurch die Möglichkeit zusätzlicher Gewichtseinsparungen im Bereich des Auslegers. Gleichzeitig wird die Stabilität der Kolbenstange durch den geringeren Lagerstellenabstand erhöht.

In vorteilhafter Ausgestaltung der Erfindung ist der Druckübertrager zwischen dem Gas, bei dem es sich vorzugsweise um Stickstoff handelt, ein Trennkolben. Ein Trennkolben ermöglicht die sichere und zuverlässige Trennung von Gas- und Schmierstoff. Es sind zwei Ausführungen denkbar:
Der Trennkolben kann in der ersten Ausführung ein von der Kolbenstange durchsetzter Ring sein. In diesem Fall befindet sich der Trennkolben in dem Ringraum des Gasdruckzylinders, wobei er unmittelbar gegen die Kolbenstange abdichten kann. Diese Bauform hat den Vorteil, dass es keine externen Schnittstellen zu außen liegenden Schmierstoffspeichern gibt, weil alle an der Schmierung beteiligten Komponenten innerhalb des Gasdruckzylinders angeordnet sind. Ein solcher Trennkolben, welcher von der als Kolbenstange durchsetzter Ring ausgebildet ist, erfordert jedoch aufgrund seiner eigenen ringförmigen Gestaltung eine Abdichtung am Außenumfang und am Innenumfang.

Zudem ist zu berücksichtigen, dass dem Trennkolben noch ein Anschlag vorgelagert sein muss, über welchen die komplett ausgefahrene Kolbenstange sich an der Kolbenstangenführung abstützt.

Alternativ ist der Trennkolben nicht als Ring, sondern als Scheibe konfiguriert, die in einem eigenen Trennzylinder angeordnet ist, dessen einer mit Schmierstoff gefüllter Raum an die Schmierstoffnut angeschlossen ist und dessen anderer Raum an den Zylinderraum des Gasdruckzylinders angeschlossen ist. Es handelt sich dann um einen seperaten Zylinder gegenüber dem Gasdruckzylinder, welche die Rückfallpresse bildet.

Als Alternative zu Trennkolben ist es auch denkbar eine flexible Membran als Druckübertrager zwischen dem gasförmigen und flüssigen Schmierstoff zu verwenden. Membrane haben den Vorteil, dass keine weitere umfangsseitige Abdichtung erforderlich ist.

Die Erfindung wird nachfolgend anhand eines in den Zeichnungen dargestellten Ausführungsbeispieles näher erläutert. Es zeigt:
- Figur 1: eine schematische Darstellung einer Rückfallpresse, die den Stand der Technik bildet;
- Figur 2: eine schematische Darstellung einer ersten Ausführungsform einer erfindungsgemäßen Rückfallpresse;
- Figur 3: eine zweite Ausführungsform einer erfindungsgemäßen Rückfallpresse und
- Figur 4: zeigt eine dritte Ausführungsform der erfindungsgemäßen Rückfallpresse.

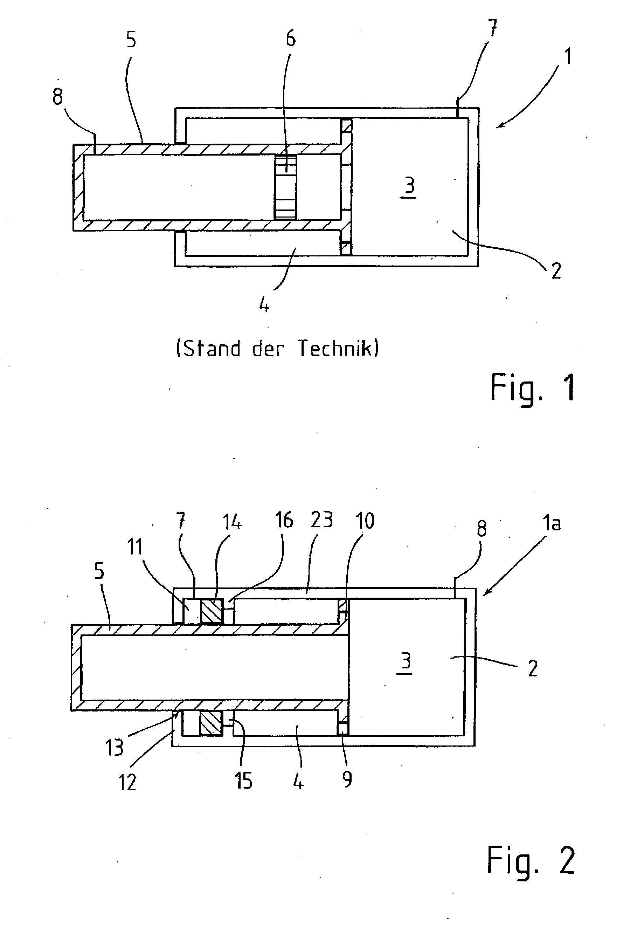

Figur 1 zeigt den Stand der Technik d. h. eine Rückfallpresse 1 in stark vereinfachter Darstellung. Die Rückfallpresse 1 besitzt einen mit Öl gefüllten Zylinderraum 2. Das Öl befindet sich sowohl im Bodenraum 3 als auch in einem Ringraum 4, der von der Kolbenstange 5 durchsetzt ist.

Die Kolbenstange 5 ist als Gasspeicher ausgebildet. Ein Trennkolben 6, innerhalb der Kolbenstange 5 trennt das in der Kolbenstange 5 befindliche Gas, insbesondere N2, von dem Öl in den übrigen Bereichen der Rückfallpresse 1.

Über einen Anschluss 7 am Bodenraum 3 kann der Zylinderraum 2 mit Öl befüllt werden. An der Kolbenstange 5 befindet sich ein Anschluss 8, über welchen der Innenraum der Kolbenstange 5 mit Gas befüllbar ist.

Diese Anordnung besitzt aufgrund des verwendeten Öls und des zur Trennung von Öl und Gas notwendigen Trennkolbens ein relativ hohes Gewicht. Diese Variante hat den Nachteil, dass das Gasvolumen etwas größer sein muss, als das bei der Hubbewegung verdrängte Ölvolumen. Dadurch ergibt sich zwingend eine erhöhte Baulänge und damit wiederum ein zusätzlich erhöhtes Gewicht.

Die Figur 2 zeigt eine erste Ausführungsform der Erfindung. Die in Figur 1 verwendeten Bezugszeichen werden für im Wesentlichen identische Bauteile weiterhin vewendet. Es ist zu erkennen, dass auch hier die in den Zylinderraum 2 eingreifende Kolbenstange 5 als Kolbenspeicher ausgeführt ist. Jedoch befindet sich weder in dem Bodenraum 3 des Zylinderraums 2 noch in dem von der Kolbenstange 5 durchsetzten Ringraum 4 Öl, sondern Gas, insbesondere Stickstoff. Die Kolbenstange 5 besitzt auch keinen innenliegenden Trennkolben sondern steht in direktem Gasaustausch mit dem Gas im Bodenraum 3. Über Durchlassöffnungen 9 im Kolben 10 der Kolbenstange 5 befindet sich der Bodenraum 3 im Gasaustausch mit dem Ringraum 4.

Das Besondere ist die Schmierung der Kolbenstange 5 über eine sehr geringe Menge Schmierstoff in Form von Öl, dass sich in einer Schmierstoffnut 11 im Bereich der Stangenführung 12 befindet. Die Schmierstoffnut 11 wird zur Umgebung hin über eine Dichtungsanordnung 13 in Form einer Dichtstelle abgedichtet. Nach innen, d. h. in Richtung zum Ringraum 4 erfolgt eine Abdichtung bzw. Abgrenzung gegenüber dem Gas im Ringraum 4 über einen Trennkolben 14. Der Trennkolben 14 ist als Ring konfiguriert und über nicht näher dargestellte Dichtmittel sowohl gegenüber der Kobenstange 5 als auch umfangsseitig gegenüber dem Zylinder 23 abgedichtet. Der Trennkolben 14 wird über den in der Rückfallpresse 1a herrschenden Gasdruck beaufschlagt und dadurch bei diesem Ausführungsbeispiel in der Bildebene nach links gedrängt. Hierzu befindet sich eine weitere Durchlassöffnung 15 in einem Anschlag 16, an welchem der Kolben 10 bei vollständig ausgefahrener Kolbenstange 5 anliegt. Über Anschlüsse 7 und 8 ist die Schmierstoffnut 11 mit Schmierstoff bzw. der Zylinderraum 2 mit Gas befüllbar.

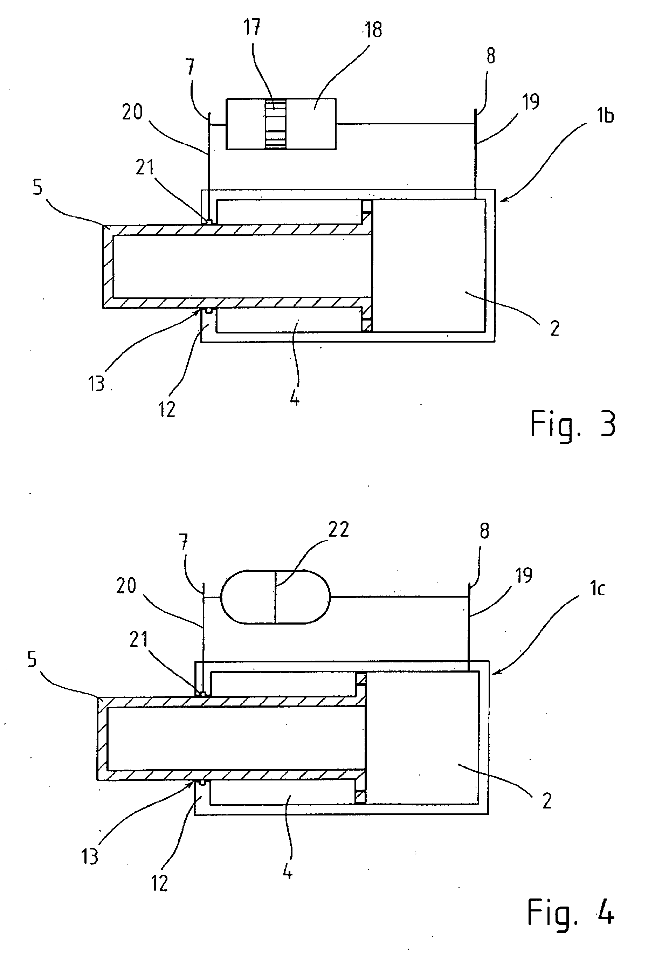

Die Ausführungsform der Figur 3 unterscheidet sich von derjenigen der Figur 2 dadurch, dass der Trennkolben 17 nicht als Ring konfiguriert ist, welcher die Kolbenstange 5 umgibt, sondern als Scheibe oder Zylinder und in einem seperaten Trennzylinder 18 abgedichtet gelagert ist. Über Leitungen 19 ist der Trennzylinder 18 einerseits mit dem Gas gefüllten Zylinderraum 2 der Rückfallpresse 1 b verbunden. Andererseits ist der Trennzylinder 18 über eine weitere Leitung 20 mit der Schmierstoffnut 21 in der Stangenführung 12 verbunden. In nicht näher dargestellter Weise befinden sich jeweils seitlich der Schmierstoffnut 21 Dichtungsanordnungen 13, die den Austritt des Schmierstoffes einerseits in die Umgebung, andererseits in den Ringraum 4 verhindern.

Über Anschlüsse 7, 8 ist sowohl Schmierstoff bzw. Gas in die dafür vorgesehenen Bereiche der Rückfallpresse 1 b einbrinbar.

Es ist auch möglich, an Stelle eines seperaten Trennzylinders 4 einen Druckübertrager 22 in Form einer Membran zur Trennung des Druckgases von dem Schmierstoff zu verwenden, so wie es bei der Ausführungsform der Figur 4 dargestellt ist. Diese Ausführungsform einer Rückfallpresse 1 c hat den Vorteil, dass dichte Mittel, die umfangsseitig des Trennzylinders 18 vorgesehen sein müssen um das Gas von dem Schmierstoff zu trennen, entfallen.

Alle weiteren Bestandteile dieser Anordnung wurden anhand der Figur 3 bereits erläutert. Auf die vorstehende Beschreibung wird Bezug genommen.

### Bezugszeichen:

1 - Rückfallpresse
1a - Rückfallpresse
1b - Rückfallpresse
1c - Rückfallpresse
2 - Zylinderraum
3 - Bodenraum
4 - Ringraum
5 - Kolbenstange
6 - Trennkolben
7 - Anschluss
8- Anschluss
9 - Durchlassöffnung
10 - Kolben
11 - Schmierstoffnut
12 - Stangenführung
13 - Dichtungsanordnung
14- Trennkolben
15 - Durchlassöffnung
16 - Anschlag
17- Trennkolben
18- Trennzylinder
19 - Leitung
20- Leitung
21 - Schmierstoffnut
22- Membran
23- Zylinder

## Patentansprüche

1. Rückfallpresse eines Kranes in Form eines Gasdruckzylinders mit folgenden Merkmalen:
a) Eine in einen Zylinderraum (2) des Gasdruckzylinders eingreifende Kolbenstange (5) ist als Kolbenspeicher ausgebildet, wobei das Gas im Bodenraum (3) des Gasdruckzylinders mit dem Gas in der Kolbenstange (5) im Austausch steht;
b) Ein die Kolbenstange (5) umgebender Ringraum (4) des Gasdruckzylinders steht im Gasaustausch mit dem Bodenraum (3);
c) Eine Dichtungsanordnung (13) in einer Stangenführung (12) des Gasdruckzylinders dichtet die Kolbenstange (5) gegenüber dem Zylinder (23) ab;
d) Die Dichtungsanordnung (13) umfasst eine in der Stangenführung (12) umlaufende Schmierstoffnut (11, 21), über welche die Kolbenstange (5) außenseitig geschmiert wird, wobei der Schmierstoff unter Zwischenschaltung eines Druckübertragers (14, 17, 22) mit dem im Zylinder herrschenden Gasdruck beaufschlagt ist.

2. Rückfallpresse nach Anspruch 1, **dadurch gekennzeichnet, dass** der Druckübertrager (14, 17) als Trennkolben ausgeführt ist.

3. Rückfallpresse nach Anspruch 2, **dadurch gekennzeichnet, dass** der als Trennkolben ausgeführte Druckübertrager (14) als von der Kolbenstange (5) durchsetzter Ring ausgebildet ist.

4. Rückfallpresse nach Anspruch 2, **dadurch gekennzeichnet, dass** der als Trennkolben ausgeführte Druckübertrager (17) als Scheibe oder als Kolben konfiguriert ist, die oder der in einem Trennzylinder (18) angeordnet ist, dessen einer mit Schmierstoff gefüllter Raum an die Schmierstoffnut (21) angeschlossen ist und dessen anderer Raum an den Zylinderraum (2) des Gasdruckzylinders angeschlossen ist.

5. Rückfallpresse nach Anspruch 1, **dadurch gekennzeichnet, dass** der Druckübertrager (22) als flexible Membran ausgeführt ist.

## Claims

1. Recoil press of a crane in the form of a gas pressure cylinder having the following features:
a) a piston rod (5) engaging in a cylinder space (2) of the gas pressure cylinder is configured as a piston accumulator, the gas in the bottom space (3) of the gas pressure cylinder being exchanged with the gas in the piston rod (5);
b) an annular space (4) surrounding the piston rod (5) of the gas pressure cylinder carries out gas exchange with the bottom space (3);
c) a seal arrangement (13) in a rod guide (12) of the gas pressure cylinder seals the piston rod (5) against the cylinder (23);
d) the seal arrangement (13) comprises a circumferential lubricant groove (11, 21) in the rod guide (12), by means of which groove the outside of the piston rod (5) is lubricated, the gas pressure prevailing in the cylinder being applied to the lubricant upon the interposition of a pressure transmitter (14, 17, 22).

2. Recoil press according to claim 1, **characterised in that** the pressure transmitter (14, 17) is formed as a separating piston.

3. Recoil press according to claim 2, **characterised in that** the pressure transmitter (14) formed as a separating piston is configured as a ring traversed by the piston rod (5).

4. Recoil press according to claim 2, **characterised in that** the pressure transmitter (17) formed as separating piston is configured as a disc or piston which is arranged in a separating cylinder (18) having a lubricant-filled space connected to the lubricant groove (21) and another space connected to the cylinder space (2) of the gas pressure cylinder.

5. Recoil press according to claim 1, **characterised in that** the pressure transmitter (22) is formed as a flexible membrane.

## Revendications

1. Presse anti-retour d'une grue sous la forme d'un cylindre à pression de gaz avec les caractéristiques suivantes :
a) une tige de piston (5) en prise dans un espace cylindrique (2) du cylindre à pression de gaz se présente sous la forme d'un accumulateur à piston, dans laquelle le gaz qui se trouve dans l'espace de fond (3) du cylindre à pression de gaz est en relation d'échange avec le gaz qui se trouve dans la tige de piston (5) ;
b) un espace annulaire (4), entourant la tige de piston (5), du cylindre à pression de gaz est en relation d'échange gazeux avec l'espace de fond (3) ;
c) un dispositif d'étanchéité (13) dans un guide-tige (12) du cylindre à pression de gaz étanche la tige de piston (5) par rapport au cylindre (23) ;
d) le dispositif d'étanchéité (13) comprend une rainure de lubrification (11, 21) circulant dans le guide-tige (12), par laquelle la tige de piston (5) est lubrifiée côté extérieur, dans laquelle le lubrifiant est injecté via un échangeur de pression (14, 17, 22) avec la pression de gaz régnant dans le cylindre.

2. Presse anti-retour selon la revendication 1, **caractérisée en ce que** l'échangeur de pression (14, 17) se présente sous la forme d'un piston séparateur.

3. Presse anti-retour selon la revendication 2, **caractérisée en ce que** l'échangeur de pression (14) se présentant sous la forme d'un piston séparateur est conformé en anneau traversé par la tige de piston (5).

4. Presse anti-retour selon la revendication 2, **caractérisée en ce que** l'échangeur de pression (17) se présentant sous la forme d'un piston séparateur est configuré en disque ou en piston, qui est aménagé dans un cylindre séparateur (18) dont un espace chargé de lubrifiant est raccordé à la rainure de lubrification (21), tandis que l'autre espace est raccordé à l'espace (2) du cylindre à pression de gaz.

5. Presse anti-retour selon la revendication 1, **caractérisée en ce que** l'échangeur de pression (22) se présente sous la forme d'une membrane souple.
